**Europäisches Patentamt**

**European Patent Office**

**Office européen des brevets**

(19)

(11) Veröffentlichungsnummer: **0 177 839**
**A2**

(12) # EUROPÄISCHE PATENTANMELDUNG

(21) Anmeldenummer: **85112164.0**

(51) Int. Cl.⁴: **B 01 D 53/34**

(22) Anmeldetag: **25.09.85**

(30) Priorität: **06.10.84 DE 3436699**

(43) Veröffentlichungstag der Anmeldung: **16.04.86**
**Patentblatt 86/16**

(84) Benannte Vertragsstaaten: **AT BE CH DE FR GB IT LI LU NL SE**

(71) Anmelder: **Degussa Aktiengesellschaft, Weissfrauenstrasse 9, D-6000 Frankfurt am Main 1 (DE)**

(72) Erfinder: **Kürzinger, Karl, Dr. Ing., Lilienstrasse 14, D-6450 Hanau 8 (DE)**
Erfinder: **Soldavini, Heinz, Dipl.-Ing., Langener Strasse 44, D-6082 Mörfelden-Walldorf (DE)**
Erfinder: **Schwab, Heinrich, Dr. Dipl.-Chem., Heinrich-Zinss-Weg 4, D-6000 Frankfurt am Main 60 (DE)**

(54) **Verfahren zur Entfernung von Schwefeldioxid und Stickoxiden aus Rauchgasen.**

(57) Es wird ein Vierstufenverfahren zur Entfernung von Schwefeldioxid und Stickoxiden aus Rauchgasen beschrieben. In einer ersten Stufe wird bei 120 bis 140°C mit 60 bis 80%iger Schwefelsäure gewaschen, in einer zweiten Stufe 10 bis 20%ige Schwefelsäure mit den heißen Rauchgasen bei 120 bis 140°C auf 60 bis 80% aufkonzentriert. In einer dritten Stufe wird das Schwefeldioxid mit 10 bis 20%iger Schwefelsäure entfernt, die 1 bis 20 g/l Wasserstoffperoxid enthält, in einer vierten Stufe die Stickoxide mit 30 bis 40%iger Salpetersäure, die ebenfalls 1 bis 20 g/l Wasserstoffperoxid enthält.

EP 0 177 839 A2

0177839

84 193 VT

Degussa Aktiengesellschaft
Weissfrauenstr.9, 6000 Frankfurt am Main

Verfahren zur Entfernung von Schwefeldioxid und Stickoxiden
aus Rauchgasen

Die Erfindung betrifft ein Verfahren zur Entfernung von
Schwefeldioxid und Stickoxiden aus Rauchgasen von Feuerungsanlagen durch Auswaschen mit Wasserstoffperoxid in Schwefelsäure bzw. Salpetersäure in einem mehrstufigen Verfahren.

Rauchgase aus Verbrennungsanlagen enthalten eine Reihe von
unerwünschten Bestandteilen, die auf einer unvollständigen
Verbrennung oder Verunreinigung im Brennstoff beruhen oder
bei der Verbrennung selbst entstehen. Zu diesen Bestandteilen gehören Stäube, Schwefeldioxid und Stickoxide, die
der Vegetation und der menschlichen Gesundheit Schaden zufügen können. Durch die jüngste Gesetzgebung auf dem Gebiet der Luftreinhaltung ist es notwendig geworden, die
Rauchgase von Feuerungsanlagen möglichst weitgehend von
Stäuben, Schwefeldioxid und Stickoxiden zu befreien.

Die heute am meisten angewandten Verfahren zur Rauchgasentschwefelung bestehen im Auswaschen der Rauchgase mit
wässrigen Suspesionen oder Lösungen von Kalziumhydroxid
oder Kalziumkarbonat. Dieses Auswaschen liefert große Mengen fester Abfälle, vor allem Gips, die kostenaufwendig
deponiert werden müssen.

Es sind auch mehrstufige Verfahren zur Entfernung von Schwefeloxiden aus Rauchgasen durch Auswaschen mit Schwefelsäure bekannt, wobei man eine 40 bis 80 %ige Schwefelsäure verwendet, die Peroxischwefelsäure oder Wasserstoffperoxid enthält. Dabei werden auch Stickoxide aus den Rauchgasen entfernt. Außerdem sind Verfahren zur Entfernung von Stickoxiden mit Salpetersäure- Wasserstoffperoxidgemischen bekannt. Diese bekannten Verfahren können allerdings die heute geforderten hohen Reinheitsgrade je nach Art der Rauchgase oft nicht erreichen.

Es war daher Aufgabe der vorliegenden Erfindung, ein Verfahren zur Entfernung von Schwefeldioxid und Stickoxiden aus Rauchgasen von Feuerungsanlagen durch Auswaschen mit Wasserstoffperoxid in Schwefelsäure bzw. Salpetersäure in einem mehrstufigen Verfahren zu entwickeln, das hohe Reinigungsgrade bei allen vorkommenden Rauchgasen erreicht, leicht zu handhaben und umweltfreundlich ist und bei dem möglichst wenig Sekundärabfall anfällt, der deponiert oder sonstwie beseitigt werden muß.

Diese Aufgabe wurde erfindungsgemäß dadurch gelöst, daß in einer ersten Stufe die Rauchgase bei 120 bis 140° C mit 60 bis 80 %iger Schwefelsäure gewaschen werden, in einer zweiten Stufe 10 bis 20 %ige Schwefelsäure bei 120 bis 140°C mit den Rauchgasen auf 60 bis 80 % aufkonzentriert wird, in einer dritten Stufe bei 25 bis 100° C mit einer 10 bis 20 %igen Schwefelsäure, die 1 bis 20 g/l Wasserstoffperoxid enthält, das Schwefeldioxid aus den Rauchgasen entfernt wird und in einer vierten Stufe bei 25 bis 40° C mit einer 30 bis 40 %igen Salpetersäure, die 1 bis 20 g/l Wasserstoffperoxid enthält, die Stickoxide aus den Rauchgasen entfernt werden.

Vorzugsweise werden die einzelnen Stufen im Kreislauf gefahren, wobei in der ersten Stufe der aus Stäuben herrührende Schlamm abgezogen und die beim Schlammabzug entstehenden Schwefelsäureverluste durch Schwefelsäure aus der zweiten Stufe ersetzt werden, die ihrerseits mit Schwefelsäure aus der dritten Stufe gespeist wird. Die Schwefelsäurekonzentration der dritten Stufe wird vorteilhafterweise durch entsprechende Temperaturregelung auf 10 bis 20 % gehalten.

Das Reinigungsverfahren läuft beispielsweise so ab, daß die heißen Rauchgase in der ersten Waschstufe bei 120 - 140$^o$C im Gegenstrom mit 60 - 80 %iger Schwefelsäure, die im Kreislauf geführt wird, gewaschen und dabei entstaubt werden. Der in der ersten Stufe anfallende Schlamm wird abgezogen und kann wahlweise im heißen Rauchgasstrom brikettiert oder in den Verbrennungsraum der Kesselanlage zurückgeführt werden. Der beim Schlammabzug auftretende Schwefelsäureverlust wird durch Rückführung von Schwefelsäure aus der zweiten Stufe in die erste Stufe ausgeglichen.

In der zweiten Stufe, die der Aufkonzentrierung dient, wird das immer noch 120 - 140$^o$ C heiße Rauchgas mit einer Schwefelsäure gewaschen, die aus der dritten Stufe in die zweite Stufe recycliert wird und 10 - 20 % $H_2SO_4$ enthält. Durch Verdampfen eines Teils des in dieser $H_2SO_4$ enthaltenen Wassers fällt im Sumpf der Stufe 2, je nach Arbeitsweise, eine 60 - 80 %ige $H_2SO_4$ an, die im Kreislauf geführt wird. Die $H_2SO_4$ der Konzentrierungsstufe wird teilweise aus dem Sumpf abgezogen, in einem Tank gesammelt und kann an anderer Stelle wieder eingesetzt werden.

Das so vorbehandelte und abgekühlte Rauchgas wird in die dritte Stufe geleitet, wo es im Gleich- oder Gegenstrom mit einer 10 - 20 %igen $H_2SO_4$, die 1 - 20 g/l $H_2O_2$ enthält und im Kreislauf geführt wird, gewaschen wird.

Die Temperatur der Kreislauf-$H_2SO_4$ wird vorzugsweise über einen Wärmetauscher geregelt und liegt bei 25 - 100$^o$ C. In dieser Stufe wird das Rauchgas weitestgehend von $SO_2$ befreit. Der Wäschersumpf wird teilweise in die Stufe 2 recycliert, wobei das in der Schwefelsäure noch enthaltene $H_2O_2$ mit dem $SO_2$ des ankommenden Rauchgases abreagiert und somit ein quantitativer $H_2O_2$-Umsatz gegeben ist.

Nach dem Passieren beispielsweise eines Tropfenabscheiders gelangt das Rauchgas in die vierte Stufe, in der im Gleich- oder Gegenstrom die weitgehende Beseitigung von Stickoxiden stattfindet. Dabei werden zur Beschleunigung des Stoffaustausches vorzugsweise Materialien hoher Oberfläche, wie z.B. Füllkörper, Tiefbettfilter, Filtermatten, Faservliese usw. eingesetzt. In dieser Stufe wird eine 30 - 40 %ige $HNO_3$, die 1 - 20 g/l $H_2O_2$ enthält, bei 25 - 40$^o$ C im Kreislauf gefahren. Die durch die $NO_x$-Beseitigung erzeugte Salpetersäure wird aus dem Wäschersumpf abgezogen, in einem Lagertank gesammelt, und kann an anderer Stelle wieder eingesetzt werden.

Das in oben beschriebener Weise gereinigte Rauchgas wird über einen zweiten Tropfenabscheider geleitet und dem Kamin zugeführt. Die Schornsteinhöhe kann durch den hohen Reinigungsgrad des beschriebenen Verfahrens gering gehalten werden.

Folgende Beispiele sollen das erfindungsgemäße Verfahren näher erläutern:

1. Das Rauchgas einer Kohlefeuerungsanlage, die mit schwefelhaltiger Kohle von 0,8 - 1 % S betrieben wird, enthält rund 1,2 g/m$^3$ $SO_2$ und 0,8 g/m$^3$ $NO_x$. Dieses wurde in einem Wärmetauscher auf 140$^o$ C abgekühlt und in der ersten Verfahrensstufe entstaubt. Zur Entstaubung des Gases wurde in der ersten Stufe eine 70 %ige $H_2SO_4$ mit einer Temperatur von 140$^o$ C im Kreislauf gefahren.

Der in der ersten Stufe anfallende Schlamm wurde abgezogen und im heißen Rauchgasstrom brikettiert. $H_2SO_4$-Verluste wurden aus dem Sumpf der zweiten Stufe ersetzt.

Das entstaubte Rauchgas gelangte anschließend in die zweite Stufe. Hier wurde die in der dritten Stufe anfallende 15 %ige $H_2SO_4$ durch Verdampfen von Wasser auf 75 % aufkonzentriert, wobei die Temperatur der in der zweiten Stufe im Kreislauf geführten $H_2SO_4$ 135° C betrug.

Das so vorbehandelte Rauchgas wurde nun in die dritte Stufe geleitet und dort mit einer 15 %igen $H_2SO_4$, die 5 g/l $H_2O_2$ enthielt, gewaschen. Dabei wurde der Sumpf der dritten Stufe ständig im Kreislauf über einen Wärmetauscher gefahren und der Kreislauflösung kontinuierlich $H_2O_2$ (50 %ig) zudosiert, wobei die Temperatur der Kreislauflösung auf 40° C geregelt wurde. Der $SO_2$-Gehalt des Rauchgases konnte bei dieser Fahrweise auf weniger als 20 ppm ($<$50 mg/m$^3$) gesenkt werden.

Anschließend gelangte das Rauchgas in die vierte Stufe und wurde mit einer 30 %igen $HNO_3$ von 30° C, die 5 g/l $H_2O_2$ enthielt und im Kreislauf geführt wurde, behandelt. Der Kreislauflösung, deren Temperatur 30° C betrug, wurde kontinuierlich $H_2O_2$ (50 %ig) zudosiert. Der $NO_x$-Gehalt des Rauchgases konnte auf weniger als 200 mg/m$^3$ gesenkt werden.

2. In der gleichen Anlage und unter den gleichen Bedingungen wie im Beispiel 1 wurde ein Rauchgas einer Schwerölfeuerung behandelt, wobei das Rauchgas 2 g/m$^3$ $SO_2$ und 0,7 g/m$^3$ $NO_x$ enthielt und die $H_2SO_4$ der dritten und vierten Stufe je 10 g/l $H_2O_2$ enthielten. Die erzielten Ergenisse waren gleich den im ersten Beispiel beschriebenen.

0177839

Mit dem erfindungsgemäßen Verfahren können praktisch alle vorkommenden Rauchgase soweit von Schwefeldioxid und Stickoxiden befreit werden, daß sie die gesetzlich geforderten Werte weit unterschreiten. Dabei entsteht lediglich Schwefelsäure und Salpetersäure, die in anderen Stellen wieder einsetzbar sind.

Degussa Aktiengesellschaft
Weissfrauenstr.9, 6000 Frankfurt am Main

Patentansprüche:

1. Verfahren zur Entfernung von Schwefeldioxid und Stickoxiden aus Rauchgasen von Feuerungsanlagen durch Auswaschen mit Wasserstoffperoxid in Schwefelsäure bzw. Salpetersäure in einem mehrstufigen Verfahren,
   dadurch gekennzeichnet,
   daß in einer ersten Stufe die Rauchgase bei 120 bis 140°C mit 60 bis 80 %iger Schwefelsäure gewaschen werden, in einer zweiten Stufe 10 bis 20 %ige Schwefelsäure bei 120 bis 130° C mit den Rauchgasen auf 60 bis 80 % aufkonzentriert wird, in einer dritten Stufe bei 25 bis 100° C mit einer 10 bis 20 %igen Schwefelsäure, die 1 bis 20 g/l Wasserstoffperoxid enthält, das Schwefeldioxid aus den Rauchgasen entfernt wird und in einer vierten Stufe bei 25 bis 40° C mit einer 30 bis 40 %igen Salpetersäure, die 1 bis 20 g/l Wasserstoffperoxid enthält, die Stickoxide aus den Rauchgasen entfernt werden.

2. Verfahren nach Anspruch 1,
   dadurch gekennzeichnet,
   daß die einzelnen Stufen im Kreislauf gefahren werden, der in der ersten Stufe entstehende Schlamm abgezogen und die Schwefelsäureverluste durch Schwefelsäure aus der zweiten Stufe ersetzt werden, die ihrerseits mit Schwefelsäure aus der dritten Stufe gespeist wird.

3. Verfahren nach Anspruch 1 und 2,
   dadurch gekennzeichnet,
   daß in der dritten Stufe die Schwefelsäurekonzentration durch Temperaturregelung auf 10 bis 20 % gehalten wird.